# EUROPÄISCHE PATENTSCHRIFT

(11) **EP 2 010 802 B1**
(45) Veröffentlichungstag und Bekanntmachung des Hinweises auf die Patenterteilung: **15.01.2014**
(21) Anmeldenummer: 07722235.4
(22) Anmeldetag: 17.04.2007
(51) Int. Cl.: F16G 13/16

(54) **ENERGIEFÜHRUNGSKETTE**
ENERGY CONDUCTION CHAIN
CHAINE D'ACHEMINEMENT D'ENERGIE

(30) Priorität: 21.04.2006 DE 202006006645 U
(43) Veröffentlichungstag der Anmeldung: 07.01.2009
(73) Patentinhaber: igus GmbH, 51147 Köln (DE)
(72) Erfinder: HERMEY, Andreas, 53773 Hennef (DE)
(74) Vertreter: Lippert, Stachow & Partner
(86) Internationale Anmeldenummer: PCT/DE2007/000677
(87) Internationale Veröffentlichungsnummer: WO 2007/121715

(56) Entgegenhaltungen:
- WO-A-00/63586
- WO-A1-2007/121713
- DE-A1- 2 656 638
- DE-U1-202006 006 638
- JP-A- 60 125 441

## Beschreibung

Die Erfindung betrifft eine Energieführungskette nach dem Oberbegriff des Hauptanspruchs.

Solche Energieführungsketten sind beispielsweise aus der DE 19919076 A1 und der DE 4313075 A1 bekannt. Sie bestehen allgemein aus zwei Strängen von Seitenlaschen, die so miteinander verbunden sind, dass sie gegeneinander verschwenkbar sind, und aus zwei oder mehreren' Querstegen, die je zwei Seitenlaschen beider Stränge unter Bildung eines Kettenglieds miteinander verbinden. Die Seitenlaschen können entweder unterschiedlich sein, wobei sich in einem Strang weitgehend ebene Innenlaschen mit Außenlaschen abwechseln, oder sie können gleich sein und beispielsweise jeweils einen nach außen und einen nach innen gekröpften Bereich aufweisen. Im Betrieb wird die mit Versorgungsleitungen versehene Energieführungskette mit einem Ende an einer stationären Versorgungsquelle und mit dem anderen Ende an einem beweglichen Verbraucher befestigt und kann so verfahren werden, dass sie ein Untertrum und ein teilweise darauf gleitend liegendes Obertrum bildet, die über einen Umlenkbereich in einer Schlaufe zusammenhängen. Erwünschte Eigenschaften der Energieführungskette sind dabei hohe Laufruhe und geringe Reibungsverluste beim Verfahren.

Die Laufruhe der Energieführungskette kann verbessert werden, wenn man auf einer bestimmten Länge möglichst viele Kettenglieder unterbringt, d. h. die Kettenglieder möglichst kurz gestaltet. Die GB 1444307 offenbart eine Energieführungskette, bei der einzelnen Kettengliedern eine Stützfläche zugeordnet ist, die so ausgerichtet ist, dass sie zusammen mit den anderen Stützflächen an der Innenseite der Schlaufe eine Ebene bildet. Gewisse Kettenglieder sind mit Rollen versehen, die mit ihrer Umfangsfläche die Stützfläche überragen und beim Verfahren des Obertrums auf dem Untertrum auf der gegenüberliegenden Stützfläche abrollen. WO 99/57457 A1 schlägt vor, die Umfangsflächen dieser Laufrollen mit einem Führungsprofil in Form umlaufender Rillen mit dazwischenliegenden Kämmen zu versehen, die in die Rillen der gegenüberliegenden Rollen eingreifen und einen unkontrollierten Seitenversatz des Obertrums verhindert können.

Durch die Anbringung der Laufrollen an den Kettengliedern werden jedoch die Kettenglieder verlängert. Eine derartige Energieführungskette hat eine geringere Laufruhe. Wenn man nur die Kettenglieder ohne Laufrollen kürzer gestaltet als die rollentragenden Kettenglieder, ergibt sich eine ungleichmäßige Verfahrbewegung der Energieführungskette beim Ablegen und Aufnehmen sowie erhöhte Geräuschbildung.

Aufgabe der vorliegenden Erfindung ist es, eine Energieführungskette mit Laufrollen anzugeben, die eine hohe Laufruhe besitzt und sich gleichmäßig und mit minimaler Geräuschbildung verfahren läßt.

Diese Aufgabe wird durch eine Energieführungskette nach dem Patentanspruch 1 gelöst.

Zwar sind aus der DE 26 56 638 A1 und der JP 60 125 441 A Energieführungsketten mit Laufrollen bekannt, wobei die Rotationsachse jeder der Laufrollen mit der Schwenkachse eines benachbarten Paars von Seitenlaschen zusammenfällt. Jedoch sind diese Rollenketten weder dafür vorgesehen noch dazu geeignet, dass die Laufrollen auf den an den Kettengliedern des gegenüberliegenden Trums vorgesehenen Laufflächen beim Verfahren der Energieführungskette abrollen können. Vielmehr sind die bekannten Rollenketten ausschließlich dazu ausgelegt, dass die Laufrollen das Untertrum und die sich im Umlenkbereich befindlichen Kettenglieder abstützen können (DE 26 56 638 A1) beziehungsweise das Obertrum auf außerhalb der Kettenglieder angeordneten Laufschienen verfahren können (JP 60 125 441 A).

Die erfindungsgemäße Lösung ermöglicht es, dass der eine, die Gleitrolle aufweisende und mit der benachbarten Seitenlasche verschwenkbar verbindbare Abschnitt einer Seitenlasche unmittelbar an den anderen, mit der auf der anderen Seite benachbarten Seitenlasche verbindbaren Abschnitt angrenzt oder sich sogar mit diesem überschneidet. Dadurch ist es möglich, die Länge der rollentragenden Kettenglieder an die Länge der anderen Kettenglieder anzugleichen, wodurch ein gleichmäßiger Ablauf mit geringer Geräuschbildung entsteht und die Laufruhe der Kette in größeren Grenzen durch Wahl der Kettengliedlänge eingestellt werden kann. Diese Ausführungsform ist bevorzugt, obwohl die Erfindung auch mit mehr oder weniger abweichender Länge der rollentragenden Kettenglieder ausführbar ist.

Bei einer erfindungsgemäßen Ausführungsform werden die Laufrollen außen an den Seitenlaschen befestigt, wobei an den Schlaufeninnenseiten der Seitenlaschen Verbreiterungen als Laufflächen für die Rollen vorgesehen sind. Dies ähnelt der in WO 99/57457 A1 gezeigten Ausführungsform, jedoch sind die Laufrollen so montiert, dass ihre Drehachse mit der Schwenkachse eines Seitenlaschenpaars zusammenfällt. Alternativ können die Laufrollen vorteilhaft im Inneren der Seitenlaschen eingegliedert sein, wobei die Schmalseiten der Laschen als Lauffläche dienen.

Bevorzugt bestehen die Seitenlaschenstränge der erfindungsgemäßen Energieführungskette mehrheitlich aus untereinander gleichen Laschen, die jeweils einen (vom Kettenglied aus gesehen) nach außen und einen nach innen gekröpften Bereich aufweisen. Beim Zusammenfügen der Kette wird dann der nach innen gekröpfte Bereich der einen Lasche auf den nach außen gekröpften Bereich der nächsten Lasche gelegt und beide schwenkbar, beispielsweise durch einen in eine Aufnahme eingeführten Gelenkzapfen, miteinander verbunden. Sollen nun Seitenlaschen mit Rollen in einen solchen Strang eingegliedert werden, dann ist es vorteilhaft, auch den mit dem rollentragenden Bereich zu verbindenden Bereich der nächsten Lasche angepaßt auszugestalten, so dass sich ein rollentragendes Seitenlaschenpaar zur Eingliederung in den Seitenlaschenstrang ergibt. Die Endbereiche dieses Seitenlaschenpaars sind dann wieder so gestaltet, dass sie mit dem beispielsweise nach innen bzw. nach außen gekröpften Bereich der untereinander gleichen Laschen verbindbar sind.

Demgemäß besteht ein solches Seitenlaschenpaar bevorzugt aus einer ersten Seitenlasche, die einen Bereich, der mit einer rollenlosen Seitenlasche verbindbar ist und eine Zunge, welche mindestens eine Rolle trägt, und aus einer zweiten Seitenlasche, die einen Bereich, der mit einer rollenlosen Seitenlasche verbindbar ist, und einen Führungsbereich aufweist. Dabei kann die Zunge mit dem Führungsbereich so verbunden werden, dass beide Seitenlaschen um eine mit der Achse der Rolle zusammenfallende Achse verschwenkt werden können.

Bevorzugt sind die mit den rollenlosen Seitenlaschen verbindbaren Bereiche der ersten und zweiten Seitenlasche zueinander komplementär. Dann läßt sich ein solches Seitenlaschenpaar auch in einen bestehenden Strang aus oben beschriebenen untereinander gleichen Seitenlaschen eingliedern.

Der Führungsbereich der zweiten Seitenlasche wird bevorzugt durch eine oder zwei Wangen gebildet, die sich beispielsweise in Fortsetzung der Seitenflächen der zweiten Seitenlasche erstrecken und einen Innenraum freilassen. Die Wangen können Mittel zum schwenkbaren Verbinden der Zunge mit ihnen aufnehmen. Diese Mittel können beispielsweise an der Zunge angebrachte Zapfen oder dergleichen sein. Bevorzugt sind in den Wangen kreisförmige Öffnungen vorgesehen, in die Scheiben eingelegt und an der Zunge befestigt, z. B. angeschraubt werden können. Diese Scheiben können zur weiteren Stabilisierung an der äußeren Stirnfläche einen außen auf der Wange aufliegende Flansch aufweisen.

Weiter bevorzugt wird der Führungsbereich durch zwei Wangen gebildet, zwischen die die Zunge mit der mindestens einen Rolle eingeschoben werden kann, so dass die Rolle mit einem Teil ihres Umfangsbereichs aus dem Führungsbereich herausragt.

Vorteilhaft sind an beiden Seiten der Zunge Rollen angebracht. Die so gebildeten Rollenpaare begrenzen zwischen sich eine Führungsrille, die der Seitenführung des.Obertrums dient. Die Befestigung an der Zunge erfolgt dabei bevorzugt durch Aufstecken auf Zapfen an der Zunge. Besonders bevorzugt sind die Rollen kugelgelagert.

Vorteilhaft ist bei der erfindungsgemäßen Energieführungskette die Schwenkachse für benachbarte Seitenlaschen unsymmetrisch angeordnet, so dass sie näher bei der Lauffläche als bei der gegenüberliegenden Schmalseite der Seitenlaschen liegt.

Die Erfindung wird nun anhand von Ausführungsbeispielen und der beigegebenen Zeichnungen näher erläutert.
Figur 1 zeigt ein Teilabschnitt einer erfindungsgemäßen Energieführungskette mit Obertrum und Untertrum in der Ansicht von außen auf einen Seitenlaschenstrang.
Figur 2 zeigt den Schnitt I-I durch den Seitenlaschenstrang der Figur 1.
Figur 3 zeigt eine erste Seitenlasche eines rollentragenden Seitenlaschenpaars in Ansichten von sechs Seiten sowie einem Querschnitt und zwei perspektivischen Ansichten.
Figur 4 zeigt eine zweite Seitenlasche eines rollentragenden Seitenlaschenpaars in Ansichten von sechs Seiten sowie einem Querschnitt und zwei perspektivischen Ansichten.
Figur 5 zeigt eine Explosionsdarstellung eines rollentragenden Seitenlaschenpaars und der im Strang benachbarten Seitenlaschen.
Figur 6 zeigt das Einführen der ersten Seitenlasche in die zweite Seitenlasche.

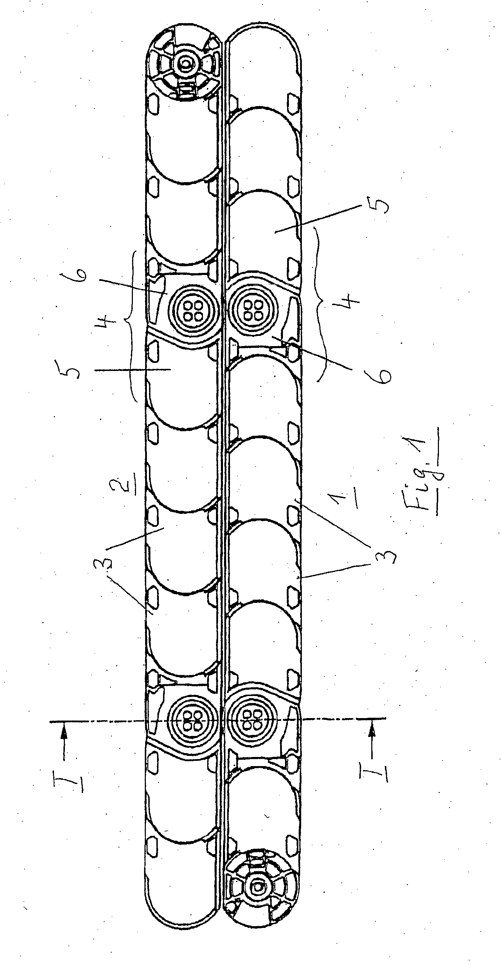

In Figur 1 ist ein Ausschnitt aus einer erfindungsgemäßen Energieführungskette mit Untertrum 1 und Obertrum 2 in Ansicht auf die Außenseite eines der Seitenlaschenstränge dargestellt. Der Strang besteht mehrheitlich aus untereinander gleichen Seitenlaschen 3. Eingegliedert sind rollentragende Seitenlaschenpaare 4, die aus ersten Seitenlaschen 5 und zweiten Seitenlaschen 6 bestehen.

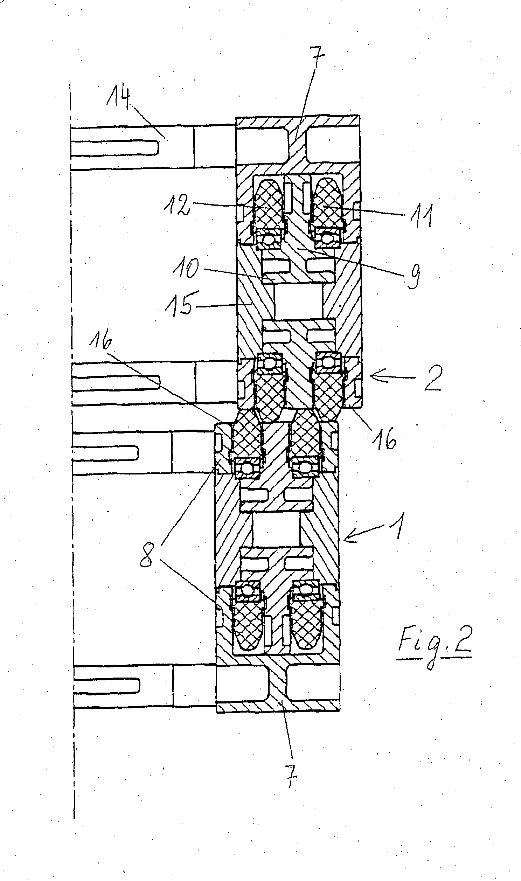

Die Schnittdarstellung Figur 2 entspricht einem Betriebszustand, bei dem die Rollen von Untertrum 1 und Obertrum 2 genau übereinanderliegen. Der Führungsbereich 7 der zweiten Seitenlasche des rollentragenden Seitenlaschenpaars erstreckt sich in zwei Wangen 8, zwischen welche die Zunge 9 der ersten Seitenlasche eingeschoben ist. Diese ist auf beiden Seiten mit Zapfen 10 ausgebildet, auf die kugelgelagerte Rollen 11, 12 aufgesteckt sind. Diese ragen mit ihrem Umfangsbereich aus der Lauffläche 16 heraus und rollen auf der gegenüberliegenden Lauffläche ab. Durch die an der Zunge 9 befestigten Scheiben 15 ist die Zunge mit dem Führungsbereich 7 schwenkbar verbunden. Die Querstege 14 stellen die Verbindung zum anderen Seitenlaschenstrang her und bilden mit beiden Strängen zusammen den Raum zur Aufnahme der Versorgungsleitungen.

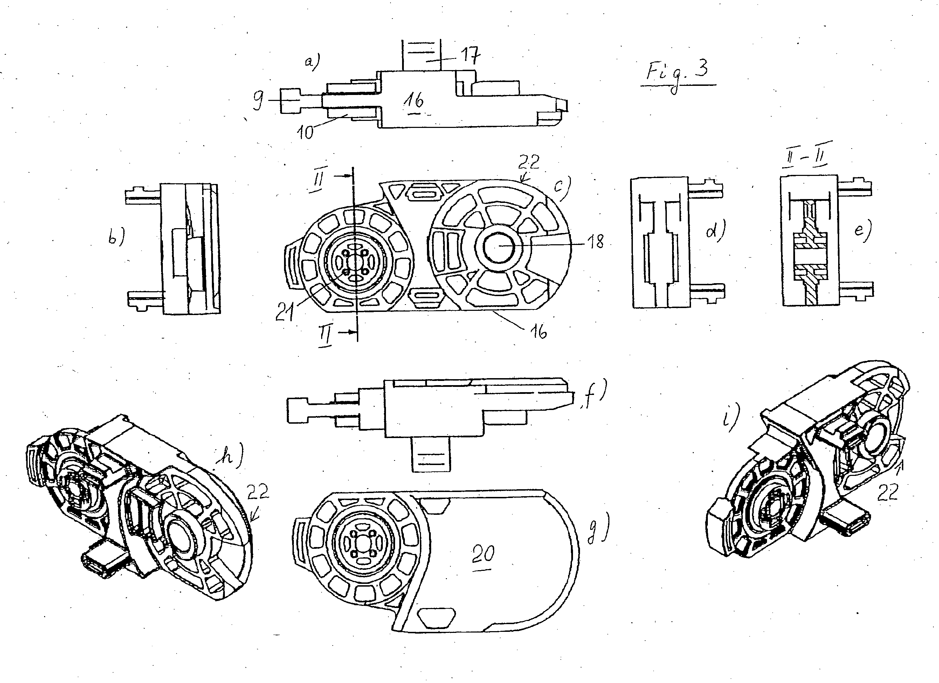

Figur 3 zeigt die erste Seitenlasche des rollentragenden Seitenlaschenpaars bei Orientierung im Untertrum 1 in Draufsicht (d. h. auf die Lauffläche 16) a), Hintersicht (d. h. aus dem Inneren des Kettenglieds) c), Untersicht f), Vorderansicht g), linke Seitenansicht b), rechte Seitenansicht d), Schnitt II-II e), sowie die Hintersicht perspektivisch nach links h) und rechts i). Die Zunge 9 mit den Zapfen 10 dient der Aufnahme der Rollen (hier nicht gezeigt) Der Bereich 22 unter der Außenfläche 20 dient zur Verbindung mit den anderen untereinander gleichen Seitenlaschen mittels der Ausnehmung 18, die einen entsprechenden Gelenkzapfen aufnehmen kann. Die Bohrungen 21 im Zapfen 10 sind für Schrauben zum Befestigen einer hier nicht gezeigten Scheibe vorgesehen. Auf die Zapfen 17 können Querstege 14 (Figur 2) aufgesteckt werden.

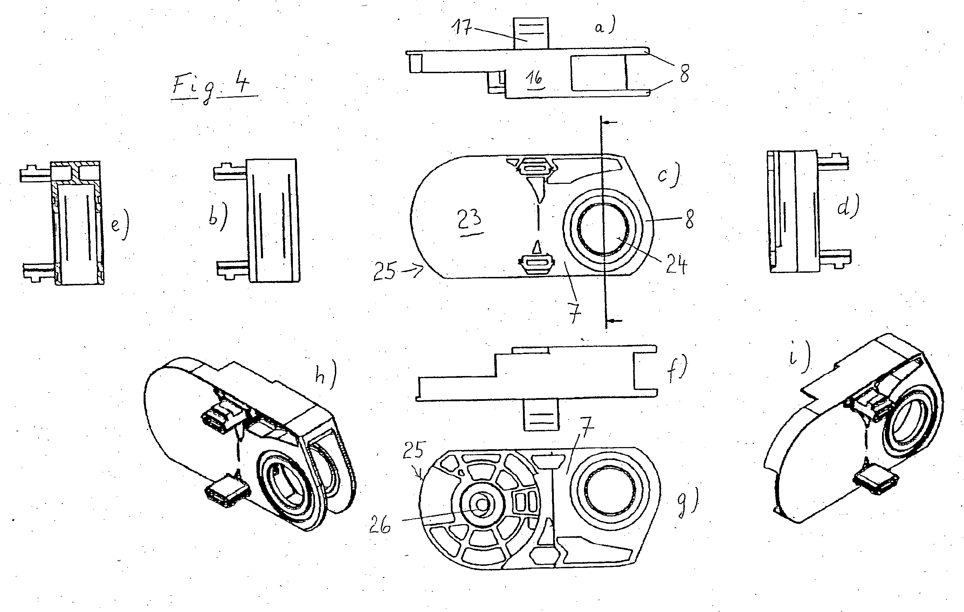

Figur 4 zeigt die zweite Seitenlasche des rollentragenden Seitenlaschenpaars in bei Orientierung im Untertrum 1 in Draufsicht (d. h. auf die Lauffläche 16) a), Hintersicht (d. h. aus dem Inneren des Kettenglieds) c), Untersicht f), Vorderansicht g), linke Seitenansicht b), rechte Seitenansicht d), Schnitt II-II e), sowie die Hintersicht perspektivisch nach links h) und rechts i). Der Führungsbereich 7 erstreckt sich in die Wangen 8, die mit Öffnungen 24 zur Aufnahme der hier nicht gezeigten Befestigungsscheibe versehen sind. Der Verbindungsbereich 25 ist hier in der Mitte mit einem Gelenkzapfen 26 versehen, der in einer Aufnahme einer benachbarten Seitenlasche aufgenommen werden kann, die der Aufnahme 18 (Figur 3) entspricht. Der Verbindungsbereich 25 an der zweiten Seitenlasche ist also komplementär zum Verbindungsbereich 22 an der ersten Seitenlasche. Die glatte Außenfläche 23 des Verbindungsbereichs weist hier zum Inneren des Kettenglieds.

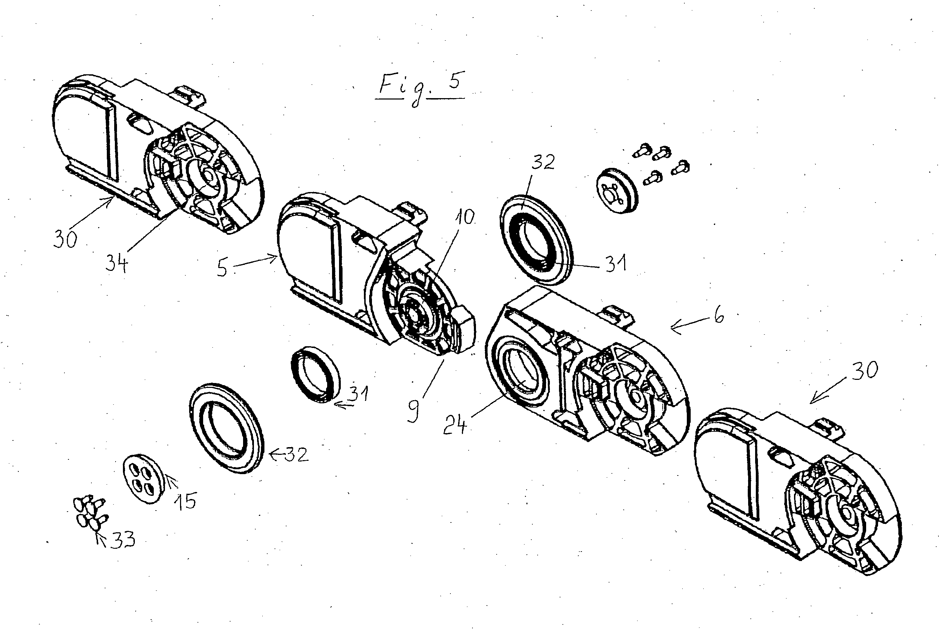

Figur 5 zeigt eine Explosionsdarstellung des rollentragenden Seitenlaschenpaars aus erster und zweiter Seitenlasche 5 bzw. 6 und zweier an dessen beiden Enden benachbarter Laschen 30 eines Seitenlaschenstrangs der erfindungsgemäßen Energieführungskette. Auf die Zapfen 10 an der Zunge 9 der ersten Seitenlasche 5 sind Laufrollen 32 aufgesteckt, die mit Kugellagern 31 versehen sind. Danach wird die Zunge 9 zwischen die Wangen 8 an der zweiten Seitenlasche 6 geführt und die erste Seitenlasche 5 an der zweiten 6 mittels der in die Öffnung 24 eingesetzten und mit Schrauben 33 an der Zunge 9 festgeschraubten Scheiben 15 schwenkbar angebracht.

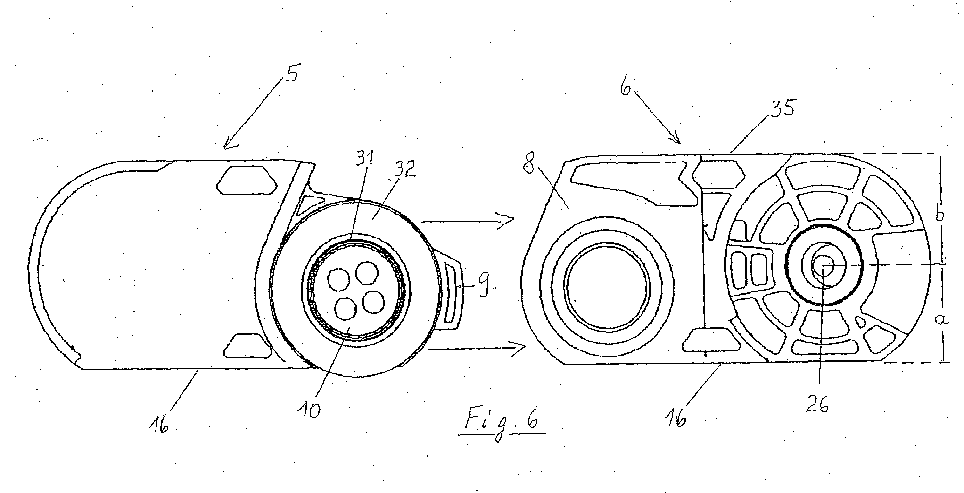

Figur 6 zeigt die Ausrichtung der ersten und zweiten Seitenlasche 5 bzw. 6 vor dem Einführen der Zunge 9 zwischen die Wangen 8, nachdem die Rollen 32 mit den Kugellagern 31 auf den Zapfen 10 aufgesteckt wurden. An dieser Figur ist auch deutlich die unsymmetrische Anordnung des Gelenkzapfens 26, dessen Achse die Schwenkachse zwischen der zweiten Seitenlasche 6 und der benachbarten Lasche 30 (Figur 5) ist, bezüglich der Schmalseiten 16 und 35 des Seitenlaschenstrangs zu sehen. Der Gelenkzapfen 26 ist nämlich der Schmalseite mit der Lauffläche 16 näher als der gegenüberliegenden Schmalseite 35 (a < b). Man erreicht dadurch, dass sich die Laufflächen 16 der benachbarten Seitenlaschen beim Verschwenken nicht behindern.

### Bezugszeichenliste

- 1: Untertrum
- 2: Oberrtum
- 3: untereinander gleiche Seitenlaschen
- 4: Seitenlaschenpaar
- 5: erste Seitenlasche
- 6: zweite Seitenlasche
- 7: Führungsbereich
- 8: Wange
- 9: Zunge
- 10: Zapfen
- 11, 12: Laufrollen
- 14: Quersteg
- 15: Scheibe
- 16: Lauffläche
- 17: Zapfen für Quersteg
- 18: Aufnahme für Gelenkzapfen
- 20: Außenfläche
- 21: Bohrung für Schraube
- 22: Verbindungsbereich
- 23: Außenfläche
- 24: Öffnung
- 25: Verbindungsbereich
- 26: Gelenkzapfen
- 30: Seitenlasche
- 31: Kugellager
- 32: Gleitrolle
- 33: Schraube
- 34: Gelenkzapfen
- 35: Schmalseite der Seitenlasche

## Patentansprüche

1. Energieführungskette zur Führung von Schläuchen, Kabeln und dergleichen mit einer Anzahl gelenkig miteinander verbundener Kettenglieder, die durch zueinander parallele, zu parallelen Seitenlaschensträngen verbundene Seitenlaschen (3), und diese verbindende Querstege (14) gebildet werden, wobei die Seitenlaschen (3) um eine je zwei benachbarten Seitenlaschen gemeinsame Schwenkachse gegeneinander verschwenkbar sind, wobei die Energieführungskette so verfahrbar ist, dass sie ein Obertrum (2), ein Untertrum (1) und einen beide verbindenden Umlenkbereich bildet, wobei das Obertrum auf dem Untertrum aufliegt und wobei zumindest an einigen Kettengliedern des Obertrums und/oder des Untertrums Laufrollen (11, 12) vorgesehen sind, die derart angeordnet sind, dass sie auf an den Kettengliedern des gegenüberliegenden Trums vorgesehenen Laufflächen (16) beim Verfahren der Energieführungskette abrollbar sind, **dadurch gekennzeichnet, dass** die Rotationsachse jeder der Laufrollen (11, 12) mit der Schwenkachse eines benachbarten Paars (4) von Seitenlaschen (5, 6) zusammenfällt.

2. Energieführungskette nach Anspruch 1, **dadurch gekennzeichnet, dass** die mit Laufrollen versehenen Kettenglieder die gleiche Länge wie die rollenlosen Kettenglieder haben.

3. Energieführungskette nach Anspruch 1 oder 2, **dadurch gekennzeichnet, dass** die Laufrollen auf der Außenseite der Kettenglieder angebracht und dass an den Schlaufeninnenseiten der Seitenlaschen Verbreiterungen als Laufflächen für die Laufrollen vorgesehen sind.

4. Energieführungskette nach einem der Ansprüche 1 bis 3, **dadurch gekennzeichnet, dass** die Laufrollen im Innern der Seitenlaschen eingegliedert sind.

5. Energieführungskette nach einem der Ansprüche 1 bis 4, **dadurch gekennzeichnet, dass** die Seitenlaschenstränge mehrheitlich aus untereinander gleichen Laschen bestehen, die jeweils einen nach innen und einen nach außen gekröpften Bereich haben, und dass in den Strängen rollentragende Seitenlaschenpaare eingegliedert sind.

6. Energieführungskette nach Anspruch 5, **dadurch gekennzeichnet, dass** die rollentragenden Seitenlaschenpaare bestehen aus
- einer ersten Seitenlasche, die einen Bereich, der mit einer rollenlosen Seitenlasche verbindbar ist und eine Zunge, welche mindestens eine Rolle trägt, aufweist, und
- einer zweiten Seitenlasche, die einen Bereich, der mit einer rollenlosen Seitenlasche verbindbar ist, und einen Führungsbereich aufweist, wobei die Zunge mit dem Führungsbereich so verbunden werden kann, dass beide Seitenlaschen um eine mit der Achse der Rolle zusammenfallende Achse verschwenkt werden können.

7. Energieführungskette nach Anspruch 6, **dadurch gekennzeichnet, dass** die mit den rollenlosen Seitenlaschen verbindbaren Bereiche der ersten und zweiten Seitenlasche zueinander komplementär sind.

8. Energieführungskette nach Anspruch 6 oder 7, **dadurch gekennzeichnet, dass** der Führungsbereich aus einer oder zwei Wangen besteht, die Mittel zum schwenkbaren Verbinden der Zunge aufnehmen können.

9. Energieführungskette nach Anspruch 8, **dadurch gekennzeichnet, dass** die Zunge zwischen zwei Wangen einschiebbar ist, wobei die mindestens eine Rolle teilweise aus dem Führungsbereich herausragt.

10. Energieführungskette nach einem der Ansprüche 6 bis 9, **dadurch gekennzeichnet, dass** zwei Rollen vorhanden sind, die an beiden Seiten der Zunge angebracht sind.

11. Energieführungskette nach einem der Ansprüche 6 bis 10, **dadurch gekennzeichnet, dass** die Rollen auf Zapfen an der Zunge aufgesteckt sind.

12. Energieführungskette nach einem der Ansprüche 6 bis 11, **dadurch gekennzeichnet; dass** die Rollen kugelgelagert sind.

13. Energieführungskette nach einem der Ansprüche 7 bis 12, **dadurch gekennzeichnet, dass** die Mittel zum Verbinden der Zunge Scheiben sind, die in eine entsprechende Öffnung der Wange eingesetzt und an der Zunge befestigt werden können.

14. Energieführungskette nach einem der vorangehenden Ansprüche, **dadurch gekennzeichnet, dass** die Schwenkachse für die benachbarten Seitenlaschen näher bei der Lauffläche (16) als bei der der Lauffläche gegenüberliegenden Schmalseite (35) der Seitenlaschen liegt.

## Claims

1. Energy guiding chain for guiding hoses, cables and the like, with a number of chain links connected to each other in articulated fashion that are formed by mutually parallel side straps (3), connected to form parallel side strap strands, and cross-members (14) connecting them, where the side straps (3) can be pivoted relative to each other about a pivoting axis common to two adjacent side straps, where the energy guiding chain can be traversed in such a way that it forms an upper strand (2), a lower strand (1) and a deflection zone connecting the two, where the upper strand lies on the lower strand, and where rollers (11, 12) are provided on at least some chain links of the upper strand and/or the lower strand, these being arranged in such a way that they roll on running surfaces (16) provided on the chain links of the opposite strand when the energy guiding chain is traversed, **characterized in that** the axis of rotation of each of the rollers (11, 12) coincides with the pivoting axis of an adjacent pair (4) of side straps (5, 6).

2. Energy guiding chain according to Claim 1, **characterized in that** the chain links provided with rollers have the same length as the rollerless chain links.

3. Energy guiding chain according to Claim 1 or 2, **characterized in that** the rollers are mounted on the outer side of the chain links, and **in that** the sides of the side straps on the inside of the loop are provided with wider areas as running surfaces for the rollers.

4. Energy guiding chain according to one of Claims 1 to 3, **characterized in that** the rollers are integrated on the inside of the side straps.

5. Energy guiding chain according to one of Claims 1 to 4, **characterized in that** the side strap strands predominantly consist of mutually identical straps, each of which displays an inwardly cranked area and an outwardly cranked area, and **in that** roller-bearing side strap pairs are integrated in the strands.

6. Energy guiding chain according to Claim 5, **characterized in that** the roller-bearing side strap pairs consist of
- a first side strap displaying an area that can be connected to a rollerless side strap, and a tongue bearing at least one roller, and
- a second side strap displaying an area that can be connected to a rollerless side strap, and a guide area, where the tongue can be connected to the guide area in such a way that both side straps can be pivoted about an axis coinciding with the axis of the roller.

7. Energy guiding chain according to Claim 6, **characterized in that** the areas of the first and second side strap that can be connected to the rollerless side straps complement each other.

8. Energy guiding chain according to Claim 6 or 7, **characterized in that** the guide area consists of one or two cheeks, which can accommodate means for connecting the tongue in pivoting fashion.

9. Energy guiding chain according to Claim 8, **characterized in that** the tongue can be inserted between two cheeks, where the at least one roller partly projects from the guide area.

10. Energy guiding chain according to one of Claims 6 to 9, **characterized in that** two rollers are present, being attached on both sides of the tongue.

11. Energy guiding chain according to one of Claims 6 to 10, **characterized in that** the rollers are fitted on pins on the tongue.

12. Energy guiding chain according to one of Claims 6 to 11, **characterized in that** the rollers are mounted in ball bearings.

13. Energy guiding chain according to one of Claims 7 to 12, **characterized in that** the means for connecting the tongue are disks that can be inserted in a corresponding opening in the cheek and fastened on the tongue.

14. Energy guiding chain according to one of the preceding Claims, **characterized in that** the pivoting axis for the adjacent side straps is closer to the running surface (16) than to the narrow face (35) of the side straps opposite the running surface.

## Revendications

1. Chaîne d'acheminement d'énergie destinée au guidage de flexibles, de câbles et d'autres dispositifs similaires comprenant un certain nombre de maillons articulés entre eux et formés par des pattes latérales (3) parallèles reliées entre elles en chaînes de pattes latérales, et par des traverses (14) les reliant, lesdites pattes latérales (3) pouvant pivoter l'une contre l'autre autour d'un axe de pivotement commun de deux pattes latérales voisines, la chaîne d'acheminement d'énergie pouvant être déplacée de manière à ce qu'elle forme un brin supérieur (2), un brin inférieur (1) et une zone de renvoi reliant les deux brins, le brin supérieur reposant sur le brin inférieur, et des galets de roulement (11, 12) étant prévus sur au moins quelques maillons de chaîne du brin supérieur et/ou du brin inférieur en étant agencés de manière à pouvoir rouler, lors d'un mouvement de déplacement de la chaîne d'acheminement d'énergie, sur des surfaces de roulement (16) prévues sur les maillons de chaîne du brin opposé, **caractérisée en ce que** l'axe de rotation de chacun des galets de roulement (11, 12) coïncide avec l'axe de pivotement d'une paire voisine (4) des pattes latérales (5, 6).

2. Chaîne d'acheminement d'énergie selon la revendication 1, **caractérisée en ce que** des maillons munis de galets de roulement ont la même longueur que les maillons pas munis de galets de roulement.

3. Chaîne d'acheminement d'énergie selon les revendications 1 ou 2, **caractérisée en ce que** les galets de roulement sont disposés sur la face extérieure des maillons, et **en ce que** sur les faces intérieures des boucles des pattes latérales sont prévus des élargissements en tant que des surfaces de roulement (16) pour les galets de roulement.

4. Chaîne d'acheminement d'énergie selon les revendications 1 à 3, **caractérisée en ce que** les galets de roulement sont incorporés dans l'intérieur des pattes latérales.

5. Chaîne d'acheminement d'énergie selon les revendications 1 ou 4, **caractérisée en ce que** les chaînes de pattes latérales majoritairement consistent en pattes se ressemblant et comportant une partie coudée vers l'intérieur et vers l'extérieur, et **en ce que** des pattes latérales portant des galets de roulement sont incorporées en paires dans les chaînes.

6. Chaîne d'acheminement d'énergie selon la revendication 5, **caractérisée en ce que** les paires de pattes latérales portant des galets de roulement se composent
- d'une première patte latérale comprenant une partie pouvant être reliée à une patte latérale pas munie de galets de roulement, et une languette portant au moins un galet de roulement, et
- d'une deuxième patte latérale comprenant une partie pouvant être reliée à une patte latérale pas munie de galets de roulement, et une partie de guidage à laquelle ladite languette peut être reliée d'une telle manière que les deux pattes latérales peuvent pivoter autour d'un axe qui coïncide avec l'axe du galet de roulement.

7. Chaîne d'acheminement d'énergie selon la revendication 6, **caractérisée en ce que** les parties de la première et la deuxième patte qui peuvent être reliées aux pattes latérales pas munies de galets de roulement sont complémentaires entre elles.

8. Chaîne d'acheminement d'énergie selon les revendications 6 ou 7, **caractérisée en ce que** la partie de guidage se compose d'une ou de deux joues destinées à recevoir des moyens pour le raccordement pivotant de ladite languette.

9. Chaîne d'acheminement d'énergie selon la revendication 8, **caractérisée en ce que** la languette peut être insérée entre deux joues, l'un au moins des galets de roulement saillant en partie hors de la partie de guidage.

10. Chaîne d'acheminement d'énergie selon l'une des revendications 6 à 9, **caractérisée en ce que** sont prévus deux galets de roulement montés aux deux côtés de la languette.

11. Chaîne d'acheminement d'énergie selon l'une des revendications 6 à 10, **caractérisée en ce que** les galets de roulement sont enfichés dans des bouchons sur ladite languette.

12. Chaîne d'acheminement d'énergie selon l'une des revendications 6 à 11, caractérisée en ce les galets der roulement sont supportés par des paliers à billes.

13. Chaîne d'acheminement d'énergie selon l'une des revendications 7 à 12, caractérisée en ce les moyens pour le raccordement de la languette sont en forme de disques pouvant être insérées dans un orifice correspondant de la joue et fixées à la languette.

14. Chaîne d'acheminement d'énergie selon l'une des revendications précédentes, **caractérisée en ce que** l'axe de pivotement pour les deux pattes latérales voisines est situé plus proche de la surface de roulement (16) que du côté étroit (35) des pattes latérales opposées à la surface der roulement.
